# EUROPEAN PATENT APPLICATION

(11) **EP 4 837 797 A1**
(43) Date of publication of application: **11.11.2026**
(21) Application number: 25175086.5
(22) Date of filing: 08.05.2025
(51) Int. Cl.: B60T 8/174, G06N 3/044

(54) **METHOD AND SYSTEM FOR PREDICTING DRIVER BRAKING INTENTION THROUGH LEG MOVEMENT**

(71) Applicant: Robert Bosch GmbH, 70442 Stuttgart (DE)
(72) Inventor: Kirchner, Tobias, 71642 Ludwigsburg (DE); Kshirasagar, Shreya, 70839 Gerlingen (DE); Schorn, Christoph, 71726 Benningen Am Neckar (DE)

(57) **Abstract**

A computer-implemented method for predicting a braking intention of a driver of a vehicle, wherein the method comprises sensing (11) the driver's foot and/or leg movements relative to a brake pedal using a sensor, classifying (12) the sensor data by a neural network into one or more classes, the one or more classes characterizing the driver's intention to brake or not to brake.

## Description

### Field of the invention

The presently disclosed subject matter relates to a computer-implemented method for predicting a driver's braking intention in a vehicle. The presently disclosed subject matter further relates to a system for predicting the braking intention of a driver in a vehicle. The presently disclosed subject matter further relates to a computer program which comprises instructions to carry out said method. The presently disclosed subject matter further relates to a computer-readable medium which comprises instructions to carry out said method.

### Background of the invention

Braking assistance systems play a crucial role in enhancing vehicle safety and mitigating the severity of accidents. These systems can provide supplemental braking force or can activate pre-emptive braking measures in critical situations, helping drivers avoid collisions or reduce impact speed. The effectiveness of braking assistance can rely on timely and accurate detection of emergency braking situations.

The invention focusses on improving braking assistance in vehicles by predicting a driver's braking intention based on their foot and/or leg movements relative to a brake pedal using a sensor. Prior art often reacts to initiation of the braking manoeuvre by the driver by reacting to brake application in order to trigger braking assistance [1]. In contrast, the invention focusses on deciding in advance of the brake application if the driver intends to brake. This leads to a potential decrease in the latency of the braking reaction. Prior art such as driver assistance systems including camera-based driver monitoring systems employ a driver monitoring camera to monitor the attentiveness of the driver and initiate a braking procedure in case a critical situation arises [2]. Furthermore, advanced driver assistance systems rely on object detection by outside sensors, such as camera, radar or lidar, to predict possible collisions and if necessary, initiate a braking reaction. They do not capture or consider the driver's intention to brake.
[1] US Patent 10315630B2
[2] US Patent 2024153283A1

### Summary of the invention

In a first aspect of the invention, a method for predicting a driver's braking intention in a vehicle is disclosed. The method may be a computer-implemented method. The method comprises sensing the driver's foot and/or leg movements relative to a brake pedal using a sensor. It also comprises classifying the sensor data by a neural network into one or more classes. These classes characterize the driver's intention to brake or not to brake. The driver preferably sitting on the driver's seat of the vehicle preferably while driving with both feet positioned in the footwell of the vehicle. The sensor may be positioned in the footwell of the vehicle.

The method makes use of the reaction time of the driver by anticipating braking maneuvers before the driver has initiated them. By using the driver's braking intention, the method may reduce the delay between a critical driving situation occurring and braking preparation and/or activation of the braking system. Leg movements may be used as first indication of the driver's reaction to a critical situation. Thus, this method may increase the driving safety and provide a means of coupling existing driver assistance systems with the prediction of the driver's braking intention.

The classes may be limited to "braking intention" and "no braking intention". For a simple embodiment, only a single class "braking intention" may be used. Furthermore, classes may also include further distinctions, for example relating to the anticipated intensity of the braking procedure and/or the determination level of the driver for performing the braking maneuver and/or the urgency of the driver's braking intention. The output of the classification may be a binary value for a simple embodiment of the outputs. Furthermore, the output may take the form of a probability. The output may contain further information apart from the braking intention, such as an estimated point in time when braking will occur. Furthermore, the output may contain a confidence score for the classification. Such a confidence score may be derived from the output probabilities of the neural network. A low confidence score may be used to postpone an action and/or may entail further processing of additional data. A low confidence score may be given if the confidence score is below a pre-defined threshold.

The sensor data may be raw sensor data and/or pre-processed sensor data. Preprocessing may include filtering, de-noising and/or extraction of features to be used as input for the neural network.

The neural network may be configured to recognize patterns indicative of driver leg movement towards the brake pedal prior to braking. The neural network may be trained on input patterns from real or simulated sensor data and an output classification of one or more classes. Among the classes may be "braking intention" and "no braking intention". The neural network may also be trained using unsupervised learning opening up the possibility to reduce bias and/or adapt to different driver's manifestations of braking intention. The neural network may also incorporate data from one or more additional sensors, this may increase accuracy and/or robustness of the predictions. Incorporating data from one or more additional sensors may use several inputs into the network and/or merging of several inputs prior to the neural network. The neural network may be finetuned or online/offline re-trained to adapt to different driver's braking styles by using for example transfer learning or continual learning. Furthermore, the adaptation may rely on pre-defined driver profiles. The profiles may be trained using a separate neural network for each driver profile or using a single neural network with outputs for each driver profile. Adaption may further include setting a movement threshold which may depend on the driver behaviour and/or body mass. Such an adaptation may involve re-training using recorded driver behaviour. In this case, the pre-braking sensor data may be included in the training process. The re-training process may be applied to the whole network or just parts of the network, i.e. the output layer. Re-training may also be implicit by exploiting the intrinsic STDP (spike timing dependent plasticity) properties of neuromorphic networks that use memristors. A personalisation via the adaptation of the neural network for different drives can enable more precise detection of breaking intentions for the different drivers and can therefore further improve said delay.

It is proposed that the method may further comprise classifying the sensor data based on one or more of an acceleration, velocity, distance to the brake pedal, or trajectory of the leg movement.

A high acceleration may indicate urgent braking intention by the driver and may be weighted highly during the classification. Such relations may be learned by the neural network during training on a set of data. Furthermore, a high velocity may indicate urgent braking intention by the driver which may be weighted highly during the classification.

Using a combination of two or more of an acceleration, velocity, distance to the brake pedal, or trajectory may lead to a more accurate classification of the driver's intention to brake compared to using only a single feature. A trajectory of the leg movement calculated based on the sensor data with well-known trajectory calculation algorithms may be incorporated into the classification to enable earlier predictions of a braking intention compared to individual metrics. Using one or more of an acceleration, velocity, distance to the brake pedal or trajectory may improve an estimate of the time remaining until the driver's foot reaches the brake pedal. This may influence the systems classification concerning urgency.

It is proposed that the method may further comprise deciding whether an intention to brake is present or not. This decision may be based on the classification by the neural network. This decision may incorporate a confidence level associated with the prediction, allowing for adaptive system behaviour based on the certainty of the prediction.

Deciding on the intention to brake may be coupled with a delay time until the intention may be changed, thus avoiding switching back and forth between predictions. The delay time may depend on the confidence level of the prediction, with a high-confidence prediction having a shorter delay time than a low-confidence prediction. Further factors apart from the sensor data may factor into the decision. For example, the situational driving context may be known to the legally mandated driver assistance system, such as detected objects ahead of the vehicle. In cases where objects ahead are known, the classification may be influenced to have an increased base confidence level towards intention to brake. This may further enhance the safety of the vehicle.

It is proposed that the method may further comprise receiving data from one or more additional sensors. This may include receiving data from one or more sensors on the outside of the vehicle, which may provide locations, objects and/or targets relevant to braking decisions. It may also include receiving data from one or more sensors inside the vehicle. The inside sensors may include a position and/or motion sensor for detecting positional changes of the acceleration pedal, a tactile sensor for detecting changes in the driver's balance on the seat, and/or an acoustic sensor for detecting an acoustic signal close to the brake pedal. The method may further comprise classifying the data from the one or more additional sensors by the neural network into one or more classes characterizing the driver's intention to brake or not to brake. The computing hardware may use a specialized hardware accelerator to improve resource consumption, for example an FPGA. The data from the additional sensors can be fused with the leg movement data using sensor fusion techniques, for example Kalman filtering.

It is further proposed that the sensor and/or one or more of the additional sensors may be event-based sensors.

Event-based sensors may comprise in particular event-based cameras, event-based motion sensors, event-based tactile sensors and/or event-based acoustic sensors.

Using event-based sensors may reduce bandwidth and processing power, since only relevant changes in the measured properties need to be transmitted by the sensor and no continuous transmission is needed. As a result, the neural network may need to process less data, making it more efficient and therefore faster at providing the classification. Thus, using event-based sensors may further reduce the delay between a critical driving situation occurring and braking preparation and/or activation of the braking system. Neural networks which maintain an internal state representing the history of previous inputs that allows them to process data by taking into account previous inputs may be advantageous for processing the data from event-based sensors. Such networks may for example be recurrent neural networks (RNNs), such as for example long short-term memory (LSTM) networks or spiking neural networks in particular.

One or more of the event-based sensors may be an event-based camera. An event-based camera may detect changes in the brightness of each pixel, triggering an event based on a defined threshold for the rate of change in brightness. An event-based camera may be suited to deal with changing light conditions and/or low light conditions such as may occur in the footwell of a vehicle.

One or more of the event-based sensors may be an event-based motion sensor. An event-based motion sensor may detect changes in acceleration or velocity, triggering an event based on a defined threshold for the rate of change in acceleration or velocity. An event-based motion sensor may be placed in the footwell of the vehicle.

One or more of the event-based sensors may be an event-based tactile sensor. An event-based tactile sensor may detect changes in pressure, triggering an event based on a defined threshold for the rate of change in pressure. An event-based tactile sensor may be placed in the driver's seat to detect shifts in balance when the leg is moving relative to the brake pedal. Furthermore, an event-based tactile sensor may be placed on the brake pedal to detect contact between the driver's foot and the brake pedal prior to the brake pedal being actuated.

One or more of the event-based sensors may be an event-based acoustic sensor. An event-based acoustic sensor may detect changes in sound pressure levels. The detection may be limited to pre-defined frequency bands. An event-based acoustic sensor may trigger an event based on a defined threshold for the rate of change in sound pressure. An event-based acoustic sensor may be placed close to the driver's legs, in particular in the footwell. The event-based acoustic sensor may detect noises related to the movement of the driver's leg when moving the leg relative to the brake pedal.

It is further proposed that the neural network may be a neuromorphic network. The neuromorphic network may be configured to recognize patterns, in particular sensor data thresholds, indicative of driver leg movement towards the brake pedal prior to braking.

The neuromorphic network may be trained on input spike patterns from real or simulated sensor data and an output classification of one or more classes. Among the classes may be "braking intention" and "no braking intention". The neuromorphic network may also be trained using unsupervised learning opening up the possibility to reduce bias and/or adapt to different driver's manifestations of braking intention. The neuromorphic network may also be suited to incorporate data from one or more additional sensors, this may increase accuracy and/or robustness of the predictions. Incorporating data from one or more additional sensors may use several inputs into the network and/or merging of several inputs prior to the neuromorphic network.

Using a neuromorphic network may lead to low latency of the classification which may be of use in time-critical braking scenarios. This further reduces the delay between a critical driving situation occurring and braking preparation and/or activation of the braking system. Furthermore, the use of a neuromorphic network may reduce power consumption compared to traditional neural networks relying on continuous input.

It is proposed that the method may further comprise predicting the intention of the driver to brake based on the classification. This prediction may trigger at least one of the following actions: moving brake pads closer to the brake disk; pre-pressurizing the brake system; tensioning seat belts; activating brake lights; and initiating a braking procedure.

The intensity of the actions may be based on the predicted braking intensity and the confidence level of the prediction.

The prediction may be based on a single threshold in the output of the neural network, where the output is compared to a pre-defined value. The prediction may also be based on multiple thresholds in the output of the neural network. The predictions may also be coupled with a time constraint. During a training procedure of the neural network, the one or more thresholds may be determined, thus limiting the computational effort during inference. The one or more threshold values may also be dynamic, varying for example with the vehicle speed or the situational driving context.

When using a neuromorphic network for prediction, the prediction may be based on the firing rate of the output layer, with a higher firing rate indicating a stronger braking intention by the driver.

In a further aspect of the invention, a system for predicting the braking intention of a driver in a vehicle is disclosed. The system is configured for carrying out the first aspect of the invention. The system comprises a sensor mounted in the footwell configured to detect the driver's foot or leg movements relative to a brake pedal.

The system also comprises one or more processors configured to receive data from the sensor. Further, the system comprises a neural network implemented in control software. The neural network is configured to analyse the sensor signals and predict the intention of the driver to brake, in particular based on one or more of an acceleration, velocity, distance to the brake pedal, or trajectory.

The system may be integrated with other vehicle systems, such as the braking system controller and the seatbelt tensioning system, to enable coordinated braking assistance. The further systems may also aid in the decision-making process. The further systems may utilize separate processors or may utilize the same one or more processors which the system for predicting the braking intention is using.

There may be different placement options for the sensor in the footwell, such as on the left or right side, on the floor mat, on the top, in the rear and on the braking pedal itself. Placing the sensor on the right side of the footwell, in the rear or on the top may be of an advantage since it allows to focus on the right leg which normally actuates the brake pedal and avoids obstruction by the left leg (when mounted on the left side) or by dirt (when mounted on the floor mat).

It is proposed that the system may further comprise one or more additional sensors. These additional sensors may comprise one or more sensors on the outside of the vehicle, such as ultrasonic, radar, camera, or lidar sensors. The additional sensors may also comprise one or more sensors inside the vehicle, such as a position sensor mounted on the acceleration pedal for detecting positional changes of the acceleration pedal, a tactile sensor mounted in the driver's seat detecting changes in the driver's balance on the seat, and/or an acoustic sensor for detecting acoustic signals mounted close to the braking pedal. The control software may be configured to classify the data from the one or more additional sensors into one or more classes characterizing the driver's intention to brake or not to brake.

A tactile sensor may measure for example pressure, force, or displacement. Ultrasonic sensors measure distances by emitting ultrasonic waves and detecting the echo reflected by its surroundings. Using the time-of-flight, the distance to an object can be calculated.

Radar sensors measure distances by emitting radio waves and detecting the echo reflected by its surroundings. Using the time-of-flight, the distance to an object can be calculated. The velocity of an object can be calculated from measuring the Doppler shift.

Lidar sensors measure distances by emitting bursts of light waves, especially laser light, and detecting the echo reflected by its surroundings. Using the time-of-flight, the distance to an object can be calculated.

Cameras may be event-triggered cameras which work especially well in combination with neuromorphic neural networks. A camera on the front windshield is legally required according for example according to NCAP regulations and thus very prevalent in new vehicles. Thus, a system for predicting the driver's intention to brake may rely on the presence of a camera on the outside of the vehicle. Using one or more sensors on the outside of the vehicle may yield information about the situational driving context, for example about other vehicles or vulnerable road users which might necessitate a braking manoeuvre. This may aid the classification of the driver's intention to brake in cases where for example the classification does not yield a high confidence score, thus improving robustness of the prediction of the driver's intention to brake.

A position sensor for detection positional changes of the acceleration pedal may be used as an additional indication of the driver's intention to break. Furthermore, detecting the positional changes of the acceleration pedal may reduce the number of false positives, where the movement of the one leg actuating the acceleration pedal is confused with the movement of the other leg relative to the brake pedal. A tactile sensor mounted in the driver's seat may detect shifts in the weight distribution or balance of the driver on the seat. This may refer to the actual movement of the leg when the leg moves relative to the brake pedal. Furthermore, this may also refer to for example a stiffening reaction in the driver's body as a first physical reaction to a critical situation before moving the leg relative to the brake pedal, and thus could be used to increase the probability of a classification as the driver's intention to brake.

Combining the sensor data of one or more of the sensors outside the vehicle and/or one or more of the sensors inside the vehicle with the sensor detecting the movement of the leg relative to the brake pedal, the prediction of the driver's braking intention may become more accurate and more robust, thus improving the overall safety of the vehicle in critical breaking situations.

In a further aspect of the invention a computer program is proposed which comprises instructions. When the program is executed by a computer, these instructions may cause the computer to carry out the first and second aspects of the invention.

In a further aspect of the invention a computer-readable medium is proposed which comprises instructions. When executed by a computer, these instructions may cause the computer to carry out the first and second aspects of the invention.

Embodiments of the invention will be discussed with reference to the following figures in more detail. The figures show:
Figure 1 a schematic flow diagram of an embodiment of the invention;
Figure 2 a schematic system of an embodiment of the invention.

### Detailed description of embodiments

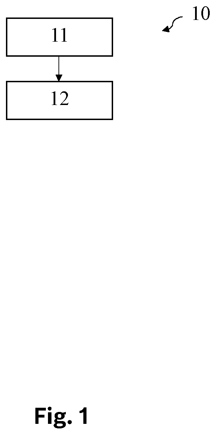

Fig. 1 schematically shows an embodiment of a flow of a method for predicting (10) driver braking intention. The driver's foot and/or leg movement towards a brake pedal may be sensed (11) using a sensor. This sensor, placed in the footwell of the vehicle, may be of various types, including but not limited to, pressure sensors, capacitive sensors, optical sensors, or inertial measurement units (IMUs). The placement of the sensor can be optimized to capture the most relevant pre-braking movements. The choice of sensor and its placement will depend on factors such as accuracy, cost, and ease of integration. The collected sensor data may be classified (12) by a neural network. This neural network may be a traditional feedforward network, a recurrent neural network (RNN), a convolutional neural network (CNN), or a neuromorphic network, among other suitable architectures. The network may be trained to recognize patterns in the sensor data that correspond to the driver's intention to brake. The classification categorizes the sensor data into one or more classes characterizing the driver's intent. The output of the classification can be a simple binary output, a probability score, or a more complex output including additional information, such as the estimated time to braking or a confidence level in the prediction. The classification results can then be used to trigger appropriate actions, such as pre-charging the braking system, adjusting seatbelt tension, or initiating a braking procedure.

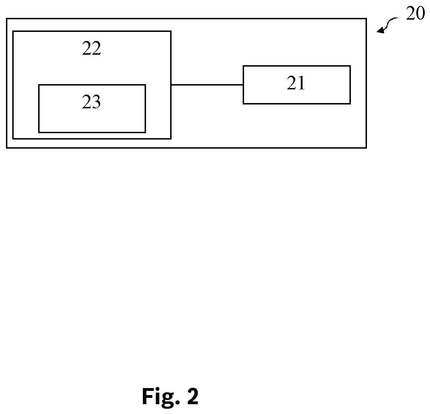

Fig. 2 schematically shows a processor system (20) which may comprise or represent a system configured to carry out the method 10 as described elsewhere in this specification. A sensor (21) may be mounted in the footwell of the vehicle and may be configured to detect the driver's foot or leg movement relative to a brake pedal. One or more processors (22) may be configured to received data from the sensor. The one or more processors may be further configured to execute a neural network (23). The neural network may be configured to analyse the sensor signals and predict the intention of the driver to brake. This prediction may be based on one or more of an acceleration, velocity, distance to the brake pedal or trajectory. This prediction may be used to trigger appropriate actions by the vehicle's braking system or other driver-assistance systems. The system may incorporate additional sensor outside or inside the vehicle to enhance accuracy and robustness of the prediction. Moreover, the neural network may be adapted to individual driver profiles for personalizing the system's response and improving its accuracy.

## Claims

1. A method for predicting a braking intention of a driver of a vehicle, wherein the method comprises
sensing (11) the driver's foot and/or leg movements relative to a brake pedal using a sensor,
classifying (12) the sensor data by a neural network into one or more classes,
the one or more classes characterizing the driver's intention to brake or not to brake.

2. Method according to claim 1, wherein the method comprises classifying the sensor data based on one or more of an acceleration, velocity, distance to the brake pedal, foot and/or leg position or trajectory.

3. Method according to one of the preceding claims, wherein the method comprises
deciding based on the classification by the neural network whether braking is intended by the driver or not.

4. Method according to one of the preceding claims, wherein the method comprises
receiving data from one or more additional sensors, comprising
receiving data from one or more sensors on the outside of the vehicle, providing locations, objects and/or targets relevant to braking decisions and/or
receiving data from one or more sensors inside the vehicle, comprising
receiving data from a position and/or motion sensor for detecting positional changes of the acceleration pedal, and/or
receiving data from a tactile sensor for detecting changes in the driver's balance on the seat, and/or
receiving data from an acoustic sensor for detecting an acoustic signal close to the braking pedal,
classifying the data from the one or more additional sensors by the neural network into one or more classes, the classes characterizing the driver's intention to brake or not to brake.

5. Method according to one of the preceding claims, wherein the sensor and/or one or more of the one or more additional sensors are event-based sensors.

6. Method according to claim 5, wherein the neural network is a neuromorphic network.

7. Method according to one of the preceding claims, wherein the method comprises based on the classification
deciding based on the classification by the neural network whether braking is intended by the driver or not,
propagating the decision to a deciding entity in the vehicle,
the deciding entity triggering at least one of
moving brake pads closer to the brake disk,
pre-pressurizing the brake system,
tensioning seat belts, and
initiating a braking procedure.

8. A system for predicting the braking intention of a driver in a vehicle, configured for carrying out the method according to one of the preceding claims, wherein the system comprises
a sensor mounted in the footwell configured to detect the driver's foot and/or leg movements relative to a brake pedal,
one or more processors configured to receive data from the sensor, wherein the one or more processors are further configured to carry out a neural network, wherein the neural network is configured to predict the intention of the driver to brake, in particular based on one or more of an acceleration, velocity, distance to the brake pedal or trajectory.

9. System according to claim 8, wherein the system comprises
one or more additional sensors, wherein the additional sensors comprise one or more sensors on the outside of the vehicle, in particular ultrasonic, radar, camera or lidar sensors, and/or
one or more sensors inside the vehicle, wherein the sensors inside the vehicle comprise
a position sensor for detecting positional changes of the acceleration pedal, and/or
a force sensor mounted in the driver's seat detecting changes in the driver's balance on the seat, and/or
an acoustic sensor for detecting acoustic signals close to the braking pedal, wherein the control software is configured to classify the data from the one or more additional sensors into one or more classes, the classes characterizing the driver's intention to brake or not to brake.

10. A computer program comprising instructions which, when the program is executed by a computer, cause the computer to carry out the method of claim 1-7.

11. A computer-readable medium comprising instructions which, when executed by a computer, cause the computer to carry out the method of claim 1-7.
